# EUROPÄISCHE PATENTSCHRIFT

(11) **EP 2 769 943 B1**
(45) Veröffentlichungstag und Bekanntmachung des Hinweises auf die Patenterteilung: **17.08.2016**
(21) Anmeldenummer: 14154678.8
(22) Anmeldetag: 11.02.2014
(51) Int. Cl.: B65G 59/10

(54) **Vorrichtung und Verfahren zum Vereinzeln von gestapelten Produkten**
Device and method for separating stacked products
Dispositif et procédé de séparation de produits empilés

(30) Priorität: 25.02.2013 DE 102013101820
(43) Veröffentlichungstag der Anmeldung: 27.08.2014
(73) Patentinhaber: Anton & Völkl Patente GmbH & Co. KG, 83737 Irschenberg (DE)
(72) Erfinder: Völkl, Thomas, 83052 Bruckmühl (DE)
(74) Vertreter: Weickmann & Weickmann PartmbB

(56) Entgegenhaltungen:
- WO-A1-2008/141396
- DE-A1- 19 710 236
- FR-A1- 2 736 904
- US-A- 3 275 189
- US-A- 3 741 410
- US-A- 3 862 702
- US-A- 4 109 803

## Beschreibung

### I. Anwendungsgebiet

Die Erfindung betrifft das Vereinzeln von gestapelten Produkten.

### II. Technischer Hintergrund

Vor allem in der Verpackungsindustrie müssen häufig gestapelt angelieferte Produkte vor der weiteren Verarbeitung vereinzelt werden.

Dies können ebene Zuschnitte für Faltkartons sein oder auch ineinander genestete Produkte, beispielsweise Schalen aus Kunststoff, in denen anschließend z.B. Lebensmittel abgelegt und eingesiegelt werden sollen.

Gerade bei ineinander genesteten Produkten - im Folgenden ist nur noch von Schalen die Rede, ohne die Erfindung hierauf zu beschränken - ist das Vereinzeln häufig schwierig, denn je nach aufgebrachtem Druck beim Ineinander-Stapeln können die ineinander genesteten Schalen sehr stark aneinander haften.

Bisher wurde das Vereinzeln durchgeführt, indem ein Abhebekeil oder eine Abhebespirale, meist mehrfach über den Umfang der Schale vorhanden, mit zunehmender Dicke zwischen die erste und die zweite Schale eingefahren wurde und dadurch die erste Schale zunehmend abgehoben wurde.

Zum einen ist dies relativ aufwändig, vor allem aber muss man dabei den Weg der einzelnen beweglichen Komponenten bei der Umstellung auf eine neue Schalenart oder Schalengröße jeweils von Hand sensibel entsprechend den Dimensionen und der Steifigkeit der neuen Schale einstellen.

Für den Bediener ist dies zeitaufwändig und wie gut das Vereinzeln funktioniert, hängt dabei stark von dem Fingerspitzengefühl des Bedieners ab.

So können solche Vereinzeler beispielsweise in der Fleischindustrie in einer Großmetzgerei betrieben werden, und die dortigen Bediener stehen unter einem enormen Zeitdruck und haben weder die Zeit noch die Erfahrung für eine mehrfach hintereinander optimierende Einstellung des Vereinzelers.

Hinzu kommt, dass die verwendeten Schalen, die ja meist aus Kunststoff bestehen, aus Gründen der Kostenersparnis immer dünner und damit immer weniger formbeständig sind, was das mechanische Vereinzeln zusätzlich stark erschwert.

**Als nächstreichender Stand der Technik zeigt die** FR 2736904 A **einen Vereinzeler, mit den Merkmalen des Oberbegriffs des Anspruchs 1, bei dem die unterste von ineinander genesteten Schalen von der Bodenseite her mittels Sauger ergriffen und durch in den Bewegungsweg der Schalen quer hineinstehende verstellbare Produktanschläge hindurchgezogen wird, wobei durch die Produktanschläge der Randbereich der jeweils abgezogenen letzten untersten Schale** elastisch **verformt wird.**

**Aus der** DE 19710236 **ist dies ebenfalls bekannt, jedoch werden die Produkte von der gleichen Seite her zugeführt wie abgeführt, sodass kein kontinuierlicher Produkt-Durchlauf gegeben ist.**

**Aus der** US 3,275,189 **ist es dagegen bekannt, die Produktanschläge dadurch zu überwinden, dass das unterste der ineinander gestapelten Produkte mittels angreifender Sauger aktiv radial nach innen gezogen wird und dadurch die Produktanschläge nicht mehr im Bewegungsweg dieses untersten, abgezogenen Produktes liegen.**

**Aus der** US 4,109,803 **ist es bekannt, vor dem Abziehen des letzten, untersten der gestapelten Produkte mittels Saugluft einen der beiden einander gegenüberliegenden Produktanschläge radial so weit nach außen zu fahren, dass der Abstand dazwischen für das Hindurchführen des Produktes ausreicht.**

### II. Darstellung der Erfindung

### a) Technische Aufgabe

Es ist daher die Aufgabe gemäß der Erfindung, eine Vorrichtung zum Vereinzeln von Produkten zur Verfügung zu stellen, welches zuverlässig funktioniert, vom mechanischen Aufbau her einfach ist und vor allem nur sehr einfache Maßnahmen für die Umstellung auf ein neues Produkt erfordert.

Es soll auch ein Verfahren zum Vereinzeln gestapelter Produkte mittels der Vorrichtung sowie zu deren Umrüsten angegeben werden.

### b) Lösung der Aufgabe

Diese Aufgaben werden durch die Merkmale der Ansprüche 1 und 11 gelöst. Vorteilhafte Ausführungsformen ergeben sich aus den Unteransprüchen.

Der Stapel aus Produkten wird auf randseitig in den Querschnittsbereich des Produktstapels hineinragende mehrere Produktanschläge aufgelegt, vorzugsweise mit möglichst geringer Auflagekraft. Zu diesem Zweck steht der Stapel aus Produkten nicht senkrecht auf den Produktanschlägen, sondern schräg geneigt unter einem Winkel, der gerade ausreicht, um den Stapel schwerkraftbedingt zu den Anschlägen nachrutschen zu lassen.

Das unterste, erste Produkt, welches direkt auf den Anschlägen aufliegt, wird anschließend von der der Zufuhrseite gegenüber liegenden Abnahmeseite aus ergriffen und durch die Anschläge hindurchgezogen und einzeln abgelegt.

Dabei gibt es prinzipiell zwei Möglichkeiten oder auch eine Kombination aus beidem:
Entweder sind die Produkte, zumindest in den Bereichen, in denen sie auf den Anschlägen aufliegen, also in ihrem Randbereich, elastisch verformbar und können deshalb mit ausreichender Kraft durch die Anschläge hindurch gezogen werden.

Eine andere, nicht erfindungsgemäße Möglichkeit besteht darin, dass die Produkte im Wesentlichen starr sind, jedoch der eine oder die mehreren Anschläge so ausgebildet sind, dass sie sich zwischen einer Rückhalteposition und einer Freigabeposition für die Produkte hin und her bewegen lassen können, sei es durch materialeigene Elastizität oder sei es durch eine gefederte Vorspannung in Richtung Rückhaltestellung oder sei es durch eine gesteuerte Verlagerung zwischen diesen beiden Positionen.

Das Ergreifen und Hindurchziehen erfolgt vorzugsweise mittels eines Saugers, der Unterdruck-beaufschlagt ist, was eine optimal niedrige Beschädigungsgefahr für das Produkt bedeutet und vor allem so gut wie keine Notwendigkeit zur Anpassung dieses Saugers an ein neues Produkt.

Denn in der Regel ist der mindestens eine Sauger unter dem Boden des Produktes positioniert und greift dort an. Falls dies nicht möglich ist, zum Beispiel wegen zu starker Verrippung, kann der Sauger auch an einer anderen Stelle angreifen, beispielsweise unter dem in der Regel doppelt gekröpften Rand des Produktes, in der Regel einer Schale.

Wie weit die Anschläge in den Bewegungsweg der Produkte hinein vorstehen und an welchen Stellen des Umfanges sie positioniert sind, und ebenso mit welcher Saugkraft und über welche Abziehstrecke der Haltekopf mit dem Abziehwerkzeug bewegt wird, hängt von dem jeweiligen Produkt, dessen Abmessungen und Steifigkeit, aber auch der Haftkraft der gestapelten Produkte gegeneinander ab.

Die Einstellung der Produktanschläge kann besonders einfach durchgeführt werden, wenn die Produktanschläge als Anschlaghülsen ausgebildet und entlang von Führungsdornen verfahren und positioniert werden, sowohl in Längsrichtung als auch in Drehrichtung, wobei sich die Führungsdorne mit ihrem freien Ende entgegen der Zufuhrrichtung parallel zum Stapel der Produkte erstrecken.

Der Hauptvorteil der Erfindung besteht darin, dass beim Umrüsten auf ein neues Produkt nicht eine Vielzahl von Parametern einzeln genau und sensibel abhängig vom neuen Produkt eingestellt werden muss, sondern die meisten der neu einzustellenden Parameter in einem fertig eingestellten Anschlaghalter, der alle Produktanschläge enthält, vorhanden sind und dieser Anschlaghalter lediglich in eine Aufnahmevorrichtung eingesetzt und befestigt werden muss. Dabei ist die Justierung des Anschlaghalters möglichst einfach gehalten, indem der Anschlaghalter erfindungsgemäß als Formatplatte gestaltet ist und vorzugsweise in Führungsschienen bis gegen einen Anschlag geschoben und befestigt wird. Nur dadurch ist der jeweilige Anschlaghalter, in Gestalt der Formatplatte, bereits richtig zur Position, also Abziehrichtung, des Haltekopfes mit den Saugern ausgerichtet, nämlich in der Regel mit der Mitte der Formatöffnung.

Lediglich auf Seiten der Abnahmevorrichtung müssen dann noch produktspezifische Neueinstellungen vorgenommen werden, was jedoch teilweise automatisch mittels einer Steuerung geschehen kann, in der für jedes zu verarbeitende Produkt die entsprechenden Parameter hinterlegt werden können:
Zum einen ist dies die Abziehstrecke, über die die Abnahmevorrichtung beim Abziehen eines Produktes bewegt wird, sowie Anfangs- und Endpunkt dieser Abziehstrecke, und darüber hinaus die Haltekraft, bei einem Sauger also die Saugkraft in Form der Größe des aufzubringenden Unterdruckes.

Die vereinzelten Produkte werden in der Regel auf einem Abförderband abgelegt und einzeln zur weiteren Verarbeitung abtransportiert. Dabei kann nach dem Vereinzeln eine Überprüfung durchgeführt werden, ob es sich bei dem vereinzelten Produkt tatsächlich um nur ein Produkt oder beispielsweise immer noch zwei aufeinanderliegende Produkte handelt.

Dies kann durch Verwiegen des vereinzelten Produktes oder durch eine Höhenkontrolle über dem Abförderband erfolgen.

Für die Durchführung des beschriebenen Verfahrens ist eine Vorrichtung besonders gut geeignet, die zum einen einen Anschlaghalter in Gestalt einer Formatplatte umfasst, an dem die Produktanschläge fest montiert und eingestellt sind, sodass diese an den gewünschten Umfangspositionen und mit dem gewünschten radialen Überstand in den Bewegungsweg der Produkte hineinragen.

Auf der Zufuhrseite des Anschlaghalters ist eine Zufuhrvorrichtung für die gestapelten Produkte vorgesehen, und auf der bezüglich der Anschläge gegenüberliegenden Abnahmeseite eine Abnahmevorrichtung, die in der Lage ist, das unterste, erste Produkt von der Abnahmeseite her zu ergreifen und durch die Anschläge hindurchzuziehen, bzw. über die Anschläge hinwegzuziehen.

Vor allem wenn die Abnahmevorrichtung mindestens einen Saugnapf aufweist, der sich an der Unterseite des untersten, ersten Produktes festsaugen kann und dieses Produkt durch Bewegung des Saugers dann durch die Anschläge hindurchzieht, sind bei Umstellung auf ein neues Produkt kaum Anpassungen der Abnahmevorrichtung an das neue Produkt notwendig, insbesondere keine Anpassung etwa eines mechanischen Greifers an die Form und Dimension des neuen Produktes. Es muss lediglich ggf. die Größe und Anzahl der Saugnäpfe sowie deren axiale Position des Angriffs am neuen Produkt festgelegt werden, wobei jedoch für viele ähnliche Produkte die gleiche Anzahl und Position von Saugnäpfen verwendet werden kann.

Die Umstellung auf ein neues Produkt wird auch dadurch erleichtert, dass die Einstellung und Positionierung aller Produktanschläge jeweils an dem Anschlaghalter fest ist, und für jedes neue zu vereinzelnde Produkt einfach ein neuer Anschlaghalter in eine entsprechende Aufnahmevorrichtung des Vereinzelers eingesetzt wird ohne aufwändige Justagemaßnahmen hinsichtlich der einzelnen Anschläge.

Aus diesem Grund ist der Anschlaghalter erfindungsgemäß als eine Formatplatte ausgestaltet, die sich quer zum Bewegungsweg der zu vereinzelnden Produkte verläuft und eine Formatöffnung aufweist, durch welche sich die Produkte hindurchbewegen, und die etwas größer ist als die zu vereinzelnden Produkte.

Die Anschläge ragen vom Rand der evtl. vorhandenen Formatöffnung aus in diese soweit hinein, dass sie in den Bewegungsweg der Produkte hinein vorstehen.

Die Zufuhrvorrichtung für die gestapelten Produkte ist dabei so gestaltet, dass das Aneinanderhaften der einzelnen Produkte möglichst wenig durch die Zufuhrvorrichtung verstärkt wird.

Dies wird beispielsweise erreicht, indem die Zufuhrrichtung gegenüber der Horizontalen gerade so stark geneigt ist, dass die gestapelten Produkte schwerkraftbedingt von selbst noch entlang der Zufuhrvorrichtung nach unten Richtung Anschlaghalter gleiten. Bei stärkerer Neigung oder gar vertikaler Ausrichtung des Stapels würden durch die Gewichtskraft des auf dem untersten Produkt lastenden Stapels die untersten zwei Produkte immer sehr stark gegeneinander gedrückt werden, was vor allem bei ineinander genesteten Produkten ein starkes Aneinanderhaften bewirkt.

Vorzugsweise liegt der Stapel aus Produkten auf Zufuhrschienen auf, die zusätzlich in einem Winkel von **10°** bis **20°** zu der Längsrichtung der Führungsdorne stehen und vorzugsweise flacher als deren Längsrichtung. Dadurch wird der Stapel aus Produkten am Übergang in den Bereich der Führungsdorne hinein leicht geknickt, und dadurch an dieser Stelle bereits die Haftkraft zweier benachbarter Produkte aneinander reduziert.

Der Hauptvorteil dieses zusätzlichen Winkels liegt jedoch darin, dass auf diese Art und Weise unterschiedlich große Produkte auf immer die gleichen Zufühschienen aufgelegt werden können, und dennoch immer zuverlässig zwischen die Anschläge des Anschlaghalters eingefädelt werden, obwohl sich beim Anschlaghalter das Zentrum der Produkte, unabhängig von deren Größe, immer auf der gleichen axialen Richtung befinden muss.

Besonders einfach können die Produktanschläge dadurch justiert werden, dass zum einen um die Formatöffnung herum mehrere Bohrungen zur Aufnahme und damit Positionierung von Führungsdornen vorhanden sind, und auch eine Auswahl an Führungsdornen besteht, die hinsichtlich der Dicke und vor allem der Länge unterschiedlich gestaltet sind.

Die Führungsdorne dienen der exakten seitlichen Führung der Produkte hinsichtlich deren Bewegungsweg im Bereich der Produktanschläge.

Die Produktanschläge können auf sehr einfache Art und Weise als Anschlaghülsen ausgebildet sein, die auf die Führungsdorne passen und somit, z.B. mittels einer einfachen Klemmschraube, hinsichtlich Längsposition und Drehlage an dem jeweiligen Führungsdorn fixiert werden können, passend zu den Abmessungen und der Formgebung des zu vereinzelnden Produktes.

Denn dabei muss nicht nur z.B. bei einer Schale als Produkt die Tiefe der Schale berücksichtigt werden, sondern vor allem deren Elastizitätseigenschaften:
Denn bei einer z.B. eckigen Schale ist der Rand in der Mitte zwischen zwei Ecken wesentlich elastischer als näher an den Ecken, und auch unter diesem Gesichtspunkt müssen die Anschläge entsprechend positioniert werden.

Auf der Abnahmeseite muss lediglich die Bewegung des Haltekopfes, mit der das Produkt ergriffen wird, also die Abziehstrecke, über die er sich beim Abziehen eines Produktes bewegt einschließlich deren Anfangspunkt und Endpunkt, bei jedem Produkt neu eingestellt werden.

Dabei kann der Anfangspunkt auf einfache Art und Weise dadurch eingestellt werden, dass die Abnahmevorrichtung in axialer Richtung verstellt werden kann, indem sie in eine Halterung geklemmt ist, und an unterschiedlichen axialen Positionen in der Halterung durch Einrasten fixiert werden kann.

Die auf der Abnahmeseite stromabwärts des Haltekopfes angeordnete Abnahmevorrichtung weist wenigstens eine quer zur Abziehrichtung verlaufende Abführschiene auf, auf der das vereinzelte Produkt abgelegt wird.

Vorzugsweise handelt es sich um zwei zueinander beabstandete Abführschienen, mit denen das vereinzelte Produkt mit seinen Rändern aufliegt.

Durch eine entsprechende Neigung der einen oder mehreren Abführschienen schräg nach unten zu einer Abtransportvorrichtung, insbesondere einem Abförderband, gleiten diese schwerkraftbedingt selbstständig nach unten.

Der Haltekopf der Abnahmevorrichtung wird über die Abziehstrecke vorzugsweise mittels eines Arbeitszylinders, beispielsweise eines Pneumatikzylinders, bewegt. Dadurch können sehr leicht Anfangs- und Endpunkt der Abziehstrecke festgelegt werden, wobei das Ende der Abziehstrecke nicht unbedingt der Endpunkt des Bewegungsweges des Arbeitszylinders sein muss, sondern dies kann auch der Punkt der Abziehstrecke sein, an dem der Saugkopf nicht mehr mit Unterdruck beaufschlagt wird, sondern mit Umgebungsdruck oder gar Überdruck und dadurch das Produkt nicht mehr weiter entlang der Abziehrichtung bewegt.

Bei Schalen als zu vereinzelnde Produkte kann also die Tiefe der Schale entweder durch entsprechende Längspositionierung der Anschläge berücksichtigt werden, und/oder durch entsprechende Positionierung des Beginns der Abziehstrecke.

Nach dem Vereinzeln wird vorzugsweise eine Kontrolle für ein erfolgreiches Vereinzeln durchgeführt, beispielsweise durch Wiegen auf dem Abförderband, ob es sich tatsächlich um ein einziges Produkt oder noch zwei aneinander haftende Produkte handelt.

Auch eine Kontrolle mittels Höhenkontrolle über dem Abförderband ist auf einfachere Art und Weise möglich, indem beispielsweise eine Ausleitschiene in einer solchen Höhe über dem Abförderband angeordnet wird, dass nur ein einzelnes Produkt darunter hindurchlaufen kann, bei zwei aufeinander liegenden Produkten diese jedoch bereits von der Ausleitschiene erfasst und seitlich ausgeleitet werden.

### c) Ausführungsbeispiele

Eine Ausführungsform gemäß der Erfindung ist im Folgenden beispielhaft näher beschrieben. Es zeigen:

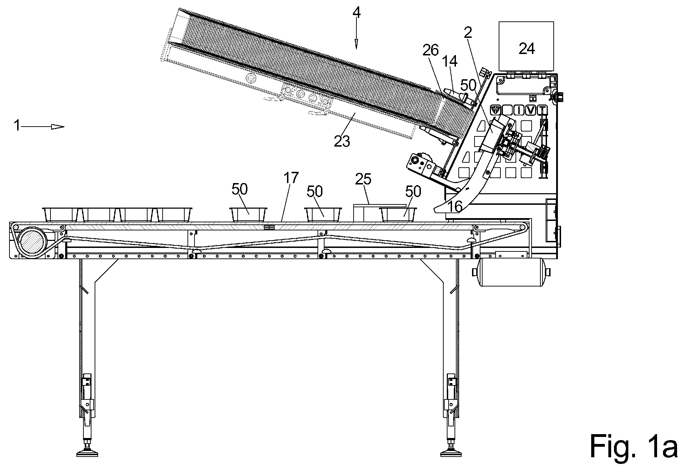

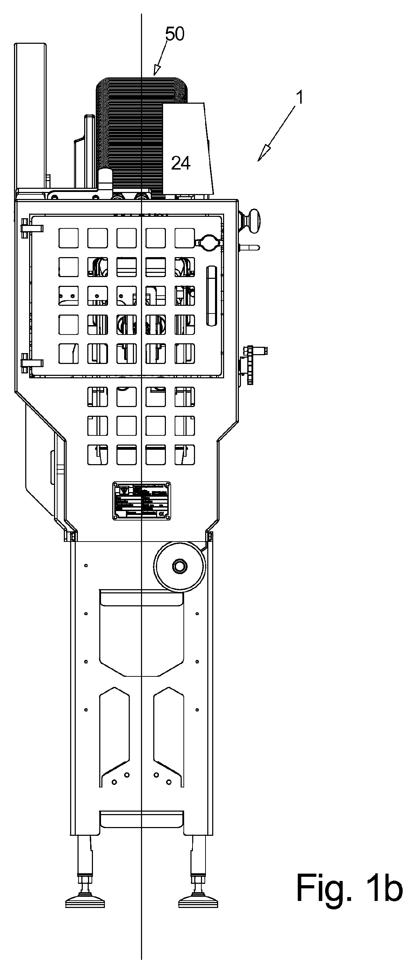

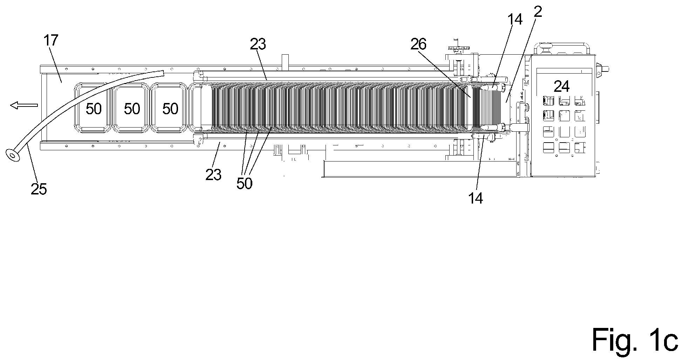

- Fig. **1**a:: den Vereinzeler in der Seitenansicht im Ganzen,
- Fig. **1**b:: den Vereinzeler in der Frontansicht,
- Fig. **1**c:: den Vereinzeler in der Aufsicht,
- Fig. **2**:: eine vergrößerte Darstellung aus der Seitenansicht der Figur 1a
- Fig. **3**a:: eine Aufsicht auf eine mit Anschlägen ausgestattete Formatplatte,

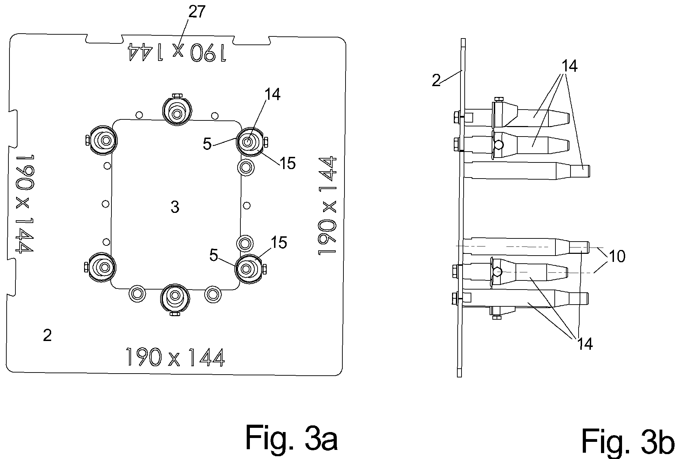

- Fig. **3**b:: eine Seitenansicht auf die Formatplatte gemäß Figur 3a,

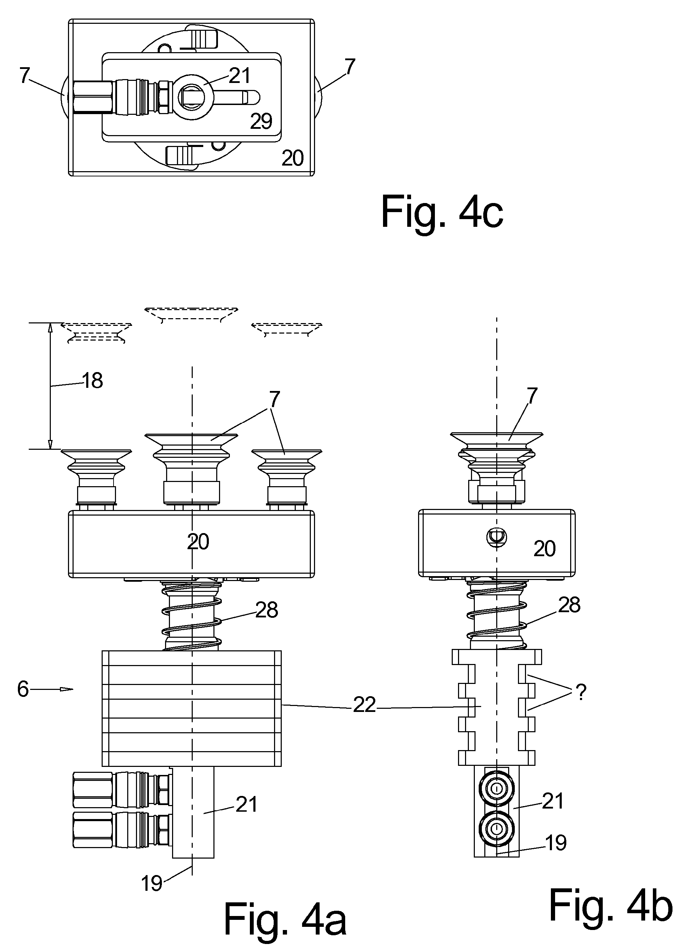

- Fig. **4**a-c:: Ansichten des Haltekopfes.

Die im Folgenden beschriebene Ausführungsform arbeitet mit elastisch verformbarem Rand der Schale **50,** jedoch starren Produkt-Anschlägen **5.**

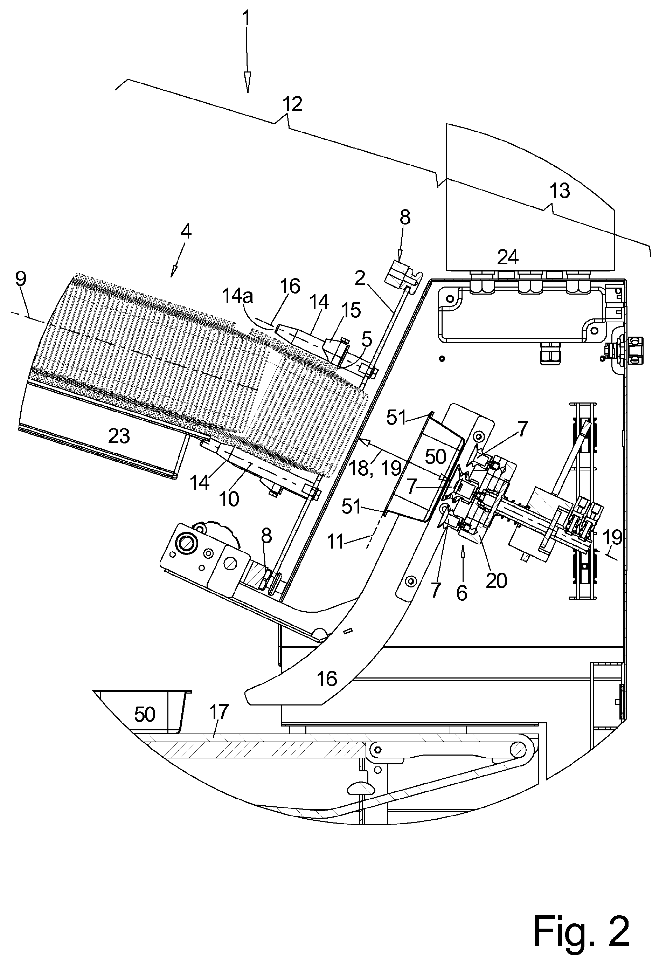

Die **Figuren 1a** **und** **2** zeigen den Vereinzeler 1 in der Seitenansicht, woraus die Funktion und die Bestandteile des Vereinzelers am besten erkennbar sind:
Die Zufuhrvorrichtung **4** für die gestapelten, ineinander genesteten Schalen **50** umfasst schräg von oben nach unten auf die Formatplatte **2** zu laufende Zufuhrschienen **23,** auf denen der Stapel aus Schalen **50** mit einer der Seiten der Schalen aufliegt.

In der Frontansicht der **Figur 1b** des Vereinzelers **1** ist außer dem Grundgestell nur die Steuerung **24,** ggf. mit Bedieneinheit, zu erkennen.

Die gestapelten Produkte **50** rutschen schwerkraftbedingt entlang der Zufuhrschienen **23** nach unten, bis die erste, unterste Schale **50** mit ihren seitlichen Rändern **51** auf den Produktanschlägen **5** aufliegt, die von der Seite her in den Bewegungsweg der gestapelten Produkte **50** ragen.

Die Produktanschläge **5** sind Bestandteil der Formatplatte **2,** die als Anschlaghalter dient:
Diese Formatplatte **2** besitzt etwa in der Mitte eine Formatöffnung **3** - wie besser in der Einzeldarstellung der Figuren 3a, b zu erkennen ist -, die etwas größer ist als der Umfang der Produkte **50** in deren Hauptebene **11.**

Um die Formatöffnung **3** herum stehen von der Formatplatte **2** aus Führungsdorne **14,** insbesondere im rechten Winkel, von der Formatplatte **2** ab, dem Stapel aus Produkten **50** entgegengerichtet und mit einem verjüngten freien Endbereich **14a** ausgestattet. Diese Führungsdorne **14,** die bevorzugt einen runden Außenumfang besitzen, dienen der exakten Seitenführung der dazwischen eingeführten Produkte **50** des Stapels in dessen unteren Bereich und gleichzeitig der Fixierung der Produktanschläge **5,** die als Anschlaghülsen **15** ausgestattet sind und mittels einer einfachen Klemmschraube sowohl in Längsrichtung als auch in Drehrichtung beliebig auf den jeweiligen Führungsdorn **14** positioniert werden können.

Durch die Längspositionierung wird festgelegt, ob und wie viel der Boden der untersten, ersten Schale **50** bereits durch die Formatöffnung **3** der Formatplatte **2** hindurchragt, wenn die Schale **50** an den Produktanschlägen **5** anliegt.

Die Produktplatte **2** mit den daran befestigten und justierten Produktanschlägen **5** und Führungsdornen **14** ist auf einfache Weise quer zur Zufuhrrichtung **9** der zuzuführenden Schalen **50** in eine Aufnahmevorrichtung **8** einschiebbar und befestigbar und dadurch exakt positioniert, insbesondere mit der Mitte ihrer Formatöffnung **3** zur axialen Richtung der Abnahmevorrichtung **6.**

Auf diese Art und Weise kann für jede zu vereinzelnde Art von Schalen **50** eine eigene Formatplatte **2** mit entsprechender Formatöffnung **3** und entsprechend positionierter Führungsdorne **14** und darauf justierter Produktanschläge **5** bevorratet werden, die beim Produktwechsel mit wenigen Handgriffen in der Aufnahmevorrichtung **8** befestigt werden können.

In den **Figuren 1a** **und** **2** ist auch ersichtlich, dass die Längsrichtung **10** der Führungsdorne **14** nicht mit der Zufuhrrichtung **9** der Zufuhrvorrichtung **4** und deren Führungsschienen **23** fluchtet, sondern letztere etwas flacher verlaufen als die Führungsdorne. Dadurch wird am Übergang zwischen den Zufuhrschienen **23,** die etwa im Bereich der freien Enden der Führungsdorne **14** enden, in den Bereich der Führungsdorne **14** hinein ein Spalt **26** des Stapels bewirkt, der auf einer Seite des Stapels aus Schalen **50** einen Abstand zwischen zwei Schalen öffnet, wodurch das starke Aneinanderhaften der ineinander genesteten Schalen **50** bereits teilweise gelöst wird. Ferner wird dadurch sichergestellt, dass die auf den immer gleichen Führungsschienen **23** aufliegenden, unterschiedlich großen Schalen **50** dennoch zwischen die Führungsdorne hineingleiten, obwohl die Mitte der Formatöffnung **3** nicht auf die Mitte der auf den Führungsschienen **23** herangeführten Schalen **50** ausgerichtet ist, sondern auf die Mitte der Abnahmevorrichtung **6.**

Auf der der Zufuhrseite **12** gegenüberliegenden Abnahmeseite **13** ist zunächst der Haltekopf **20** mit seinen Saugnäpfen **7** an der Frontseite zu erkennen, der in den **Figuren 4a** **bis c** separat dargestellt ist:
Der Haltekopf **20** ist Bestandteil der Abnahmevorrichtung **6** und kann in Abziehrichtung **19,** die vorzugsweise mit der Längsrichtung **10** der Führungsdorne **14** übereinstimmt, an die unterste Schale **50** soweit angenähert werden, dass der wenigstens eine Saugnapf **7** die Unterseite dieser Schale **50** erreicht und mittels Unterdruck und Saugkraft hält.

Beim Rückwärtsbewegen des Haltekopfes **20** in Abziehrichtung **19** zieht der Haltekopf **20** diese Schale **50** mit und unter Verformung der Ränder **51** der Schale **50** durch die Produktanschläge **5** durch.

Durch Abstellen der Saugkraft im Saugnapf 7 wird die vereinzelte Schale **50** vom Haltekopf **20** gelöst und auf einer oder zwei beabstandeten Abführschienen **16** abgelegt, die von der Position des Haltekopfes **20** aus schräg nach unten führt in Richtung eines Abförderbandes **20,** sodass die vereinzelte Schale **50** schwerkraftbedingt entlang der Abführschiene **16** nach unten gleitet auf ein Abförderband **2.** Sodann fährt der Haltekopf wieder vor und ergreift die nächste, untere Schale des Stapels und wiederholt den Vorgang.

In der Regel handelt es sich dabei um zwei in einem solchen Abstand nebeneinander verlaufende Abführschienen **16,** dass die vereinzelte Schale **50** mit ihren Rändern darauf aufliegt und zwischen den Abführschienen **16** hängt, sodass der Freiraum dazwischen für den Haltekopf **20** ausreicht.

In gleicher Weise ist auch der Abstand der beiden Zufuhrschienen **23** auf die in dieser Richtung vorhandene Breite der Schalen **50** eingestellt und muss beim Wechsel auf eine neue Art von Schalen meist ebenfalls neu eingestellt werden.

**Figur 3a** zeigt in der Aufsicht die Formatplatte **2** mit den um die Formatöffnung **3** herum angeordneten Führungsdornen **14** und darauf aufgesetzten und justierten Anschlaghülsen **15.**

Dabei ist zu erkennen, dass die Formatplatte **2** zunächst einmal eindeutig (bei 27) gekennzeichnet, beispielsweise beschriftet, ist für die Zuordnung zu einer bestimmten Sorte von Schalen **50.**

Desweiteren sind am Außenumfang der Formatplatte **2** ein oder mehrere Einbuchtungen zu erkennen, die der exakten formschlüssigen Positionierung der Formatplatte **2** nach Einschieben in der Aufnahmevorrichtung **8** dienen.

In **Figur 3b** ist in der Seitenansicht hinsichtlich der Führungsdorne **14** auch zu erkennen, dass diese unterschiedlich lang sind und ihren verjüngten Bereich nicht ganz am freien Ende **14a** besitzen müssen, sondern auch von diesem zurückversetzt einen solchen verjüngten Bereich aufweisen können. Die längeren Führungsdorne **14** mit dem zurückversetzten verjüngten Bereich sind vorzugsweise auf der Unterseite des zugeführten Stapels von Produkten **50** angeordnet.

In **Figur 4** ist die Abnahmevorrichtung **6** in den einzelnen Ansichten dargestellt:
In der Seitenansicht der **Figur 4a****,** also in gleicher Blickrichtung wie bei den Figuren **1a** und **2****,** ist erkennbar, dass auf der Vorderseite des Haltekopfes **20** insgesamt **3** Saugnäpfe **7** angeordnet sind, die mit Unterdruck beaufschlagbar sind, wovon der mittlere im Moment weiter vorsteht, weil eben der elastische Balg dieses mittleren Saugers etwas weiter auseinandergefahren ist.

Der gesamte Haltekopf **20** ist gegenüber dem Grundkörper **22** der Abnahmevorrichtung **6** in Abziehrichtung **19** beweglich, indem der Grundkörper **22** einen Pneumatikzylinder aufweist, auf dessen vorderen Ende der Haltekopf **20** sitzt, der somit gegenüber dem Grundkörper **22** der Abnahmevorrichtung **6** entlang der Abziehrichtung **19** beweglich ist um eine Abziehstrecke **18,** wie in Figur **4a** angedeutet.

Für eine minimale Annäherung des Haltekopfes **20** an den Grundkörper **22** der Abnahmevorrichtung **6** ist dazwischen eine Feder **28** angeordnet, die auch ausgleichend wirkt hinsichtlich der richtigen Axialenposition beim kontaktieren der untersten Schale **50** durch den Haltekopf **20** und dessen Sauger **7.**

Am hinteren Ende des Grundkörpers **22** sind die beiden Anschlüsse für die Unterdruckversorgung der Saugnäpfe **7** zu erkennen, die - gesteuert von einer Steuerung **24** des Vereinzelers **1** aus - ebenso wie die anderen Funktionen des Vereinzelers angesteuert werden.

Die gesamte Abnahmevorrichtung **6** ist in Abziehrichtung **19** entlang des Grundgestells des Vereinzelers **1** verstellbar, indem die in **Figur 4b** sichtbaren Einbuchtungen wahlweise in eine gabelförmige, nicht dargestellte Halterung des Grundgestells eingedrückt werden kann, wodurch eine Anpassung der vordersten, ausgefahrenen Position des Haltekopfes **20** in Anpassung an die Tiefe der zu vereinzelnden Schalen **50** möglich ist.

Die axiale Anpassung zwischen Abnahmevorrichtung **6** und den jeweils zu bewältigenden Schalen **50** kann also auf unterschiedliche Art und Weise erfolgen:
- Die Grobeinstellung erfolgt durch die verwendete, zu den jeweiligen Schalen passende Formatsplatte **2** und die daran realisierte axiale Positionierung der Produkt-Anschläge **5** entlang der Führungsdorne **14,**
- die mittlere Einstellung erfolgt durch Einrasten des Grundkörpers **22** der Abnahmevorrichtung **6** in die Aufnahme am Grundgestell,
- die Feinpositionierung wird erreicht durch die ausgleichende Wirkung der Feder **28** und der axialen Variabilität der Faltenbälge der Sauger **7.**

Zusätzlich kann - wie in der rückseitigen Ansicht des Haltekopfes **20** in **Figur 4c** zu erkennen - - der Haltekopf **20** durch Lösen der dort sichtbaren Verriegelungs-Laschen vom Rest der Abnahmevorrichtung **6** gelöst und um **90°** um die axiale Richtung gedreht werden in Anpassung daran, ob die jeweiligen Schalen **50** mit ihrer größten Erstreckung in Querrichtung oder in aufrecht stehender Lage verarbeitet werden sollen.

In der Seitenansicht der Figur **1a** sowie der Aufsicht der Figur **1c** ist ferner die Ableitschiene **25** zu erkennen, die quer in den Bewegungsweg der vereinzelten, mittels des Abförderbandes **17** abgeförderten Schalen **50** hineinragt und in der Lage ist, noch genestete Schalen vom Abförderband 17 herunter abzuleiten.

Dies geschieht jedoch nur dann, wenn - wie in **Figur 1a** ersichtlich - auf dem Förderband **17** zwei noch ineinander genestete Schalen vermeintlich als vereinzelt darauf abgelegt wurden, denn dann besitzen diese beiden zusammen eine größere Höhe als eine vereinzelte Schale, sodass die obere Schale noch von der Ableitschiene **25** ergriffen wird.

### BEZUGSZEICHENLISTE

- **1**: Vereinzeler
- **2**: Anschlaghalter, Formatplatte
- **3**: Formatöffnung
- **4**: Zufuhrvorrichtung
- **5**: Produkt-Anschlag
- **6**: Abnahmevorrichtung
- **7**: Saugnapf
- **8**: Aufnahmevorrichtung
- **9**: Zufuhrrichtung
- **10**: Längsrichtung
- **11**: Hauptebene
- **12**: Zufuhrseite
- **13**: Abnahmeseite
- **14**: Führungsdorn
- **14a**: freies Ende
- **15**: Anschlaghülse
- **16**: Abführschiene
- **17**: Abförderband
- **18**: Abziehstrecke
- **19**: Abziehrichtung
- **20**: Haltekopf
- **21**: Pneumatik-Zylinder
- **22**: Grundkörper
- **23**: Zufuhrschiene
- **24**: Steuerung
- **25**: Ableitschiene
- **26**: Knick, Abstand
- **27**: Kennzeichnung
- **28**: Feder
- **50**: Schale, Produkt
- **51**: Rand

## Patentansprüche

1. Vereinzeler für gestapelte Produkte (50), insbesondere Schalen (50), mit
- einer Zufuhrvorrichtung (4), um die gestapelten Produkte (50) entlang eines Bewegungsweges zuzuführen,
- wenigstens einem Produkt-Anschlag (5), der in den Bewegungsweg der Produkte (50) hinein vorsteht und von einem Anschlaghalter (2) gehalten wird,
- wobei die Zufuhrvorrichtung (4) auf einer Zufuhrseite (12) des Anschlaghalters (2) angeordnet ist,
- einer Abnahmevorrichtung (6) auf einer der Zufuhrseite (12) bezüglich des Anschlaghalters (2) gegenüber liegenden Abnahmeseite (13), die in der Lage ist, das unterste der gestapelten Produkte (50) auf der Abnahmeseite (13) zu ergreifen und über den wenigstens einen Produkt-Anschlag (5) hinweg zu ziehen, wobei die gestapelten Produkte (50) wenigstens an ihrem äußeren Rand **(51)** elastisch sind,
**dadurch gekennzeichnet, dass**
- von dem Anschlaghalter (2) alle Produkt-Anschläge (5) gehalten werden,
- der Anschlaghalter (2) eine Formatplatte (2) ist, die quer zum Bewegungsweg der zu vereinzelnden Produkte (50) steht mit einer Formatöffnung (3), die größer ist als das Produkt (50), betrachtet quer zu dessen Hauptebene (11) und durch welche die zu vereinzelnden Produkte (50) von der Abnahmevorrichtung (6) hindurch bewegt werden,
- die Produkt-Anschläge (5) vom Rand der Formatöffnung (3) aus in diese so weit hineinragen, dass sie in den Bewegungs-Weg der durch die Formatöffnung (3) hindurch bewegten Produkte (50) hineinragen,
- die Formatplatte (2) mit den Produkt-Anschlägen (5) in einer Aufnahmevorrichtung (8) aufgenommen ist, in der sie formschlüssig positionsgenau, schnell und exakt positionierbar ist.

2. Vereinzeler nach Anspruch 1,
**dadurch gekennzeichnet, dass**
die Produkt-Anschläge (5) von der Ebene des Anschlaghalters (2) aus versetzt sind in Richtung Zufuhrseite (12).

3. Vereinzeler nach einem der vorhergehenden Ansprüche,
**dadurch gekennzeichnet, dass**
die Formatplatte (2) in die Aufnahmevorrichtung (8) einschiebbar ist, vorzugsweise mit der Mitte der Formatöffnung (3) ausgerichtet auf die Mitte und Abziehrichtung (19) der Abnahmevorrichtung (6).

4. Vereinzeler nach einem der vorhergehenden Ansprüche,
**dadurch gekennzeichnet, dass**
die Abnahmevorrichtung (6) mindestens einen Saugnapf (7) aufweist, der gesteuert mit Unterdruck beaufschlagbar ist, und bewegbar ist quer zur Hauptebene (11) des zu ergreifenden ersten Produktes (50), und der Saugnapf (7) insbesondere unter dem Boden oder unter dem doppelt gekröpften Rand des ersten Produktes (50) positioniert ist.

5. Vereinzeler nach einem der vorhergehenden Ansprüche,
**dadurch gekennzeichnet, dass**
- die Zufuhrvorrichtung (4) für die gestapelten Produkte (50) schräg von oben nach unten auf den Anschlaghalter (2) zu gerichtet ist und die Zufuhrrichtung (9) gerade so stark geneigt ist, dass die gestapelten Produkte (50) schwerkraftbedingt entlang der Zufuhrvorrichtung (4) zum Anschlaghalter (2) gleiten, und/oder
- um die Formatöffnung (3) herum Führungsdorne (14) angeordnet sind, die von der Formatplatte (2) aus, in Zufuhrrichtung (9) aufragen und insbesondere ein sich verjüngendes freies Ende (14a) aufweisen.

6. Vereinzeler nach Anspruch 5,
**dadurch gekennzeichnet, dass**
- die Produktanschläge (5) Anschlaghülsen (15) sind, die auf die Führungsdorne (14) passen und auf diesen in Längsrichtung (10) der Führungsarme (14) positioniert, insbesondere verrastet oder verklemmt sowie insbesondere auch gedreht werden können, und/oder
- die Abnahmevorrichtung (6) in Abziehrichtung (19) einstellbar und positionierbar ist.

7. Vereinzeler nach einem der vorhergehenden Ansprüche,
**dadurch gekennzeichnet, dass**
- die Abziehstrecke (18) der Abnahmevorrichtung (6) einstellbar ist, und/oder
- die Abnahmevorrichtung (6) wenigstens eine quer zur Abnahmevorrichtung (6) verlaufende Abführschiene (16) umfasst, auf der das vereinzelte Produkt (50) abgelegt wird, und die Abführschiene (16) insbesondere schräg nach unten zu einer Abtransportvorrichtung, insbesondere einem Abförderband (17), gerichtet ist.

8. Vereinzeler nach einem der vorhergehenden Ansprüche 5 - 7,
**dadurch gekennzeichnet, dass**
- die Produktanschläge (5) mindestens auf zwei einander gegenüber liegenden Seiten der Formatöffnung (3) angeordnet sind, und/oder
- die Verlaufsrichtung der Zufuhrvorrichtung (4) in einem Winkel von 10° bis 20° zur Längsrichtung (10) der Führungsdorne (14) steht und flacher als diese verläuft.

9. Vereinzeler nach einem der vorhergehenden Ansprüche,
**dadurch gekennzeichnet, dass**
- ein Haltekopf (20) der Abnahmevorrichtung (6), insbesondere der Saugnapf (7), in Abziehrichtung (19) mittels eines Arbeitszylinders, insbesondere eines Pneumatikzylinders (21), bewegt wird, und/oder
- eine Steuerung (22) vorhanden ist, die sowohl den Haltekopf (20) der Abnahmevorrichtung (6) in und gegen die Abziehrichtung (19) ansteuert sowie das Ergreifen des ersten Produktes (50), insbesondere durch Steuern der Saugluftbeaufschlagung des Saugers.

10. Vereinzeler nach einem der vorhergehenden Ansprüche 7 - 9, **dadurch gekennzeichnet, dass**
- stromabwärts der Abnahmevorrichtung (6), insbesondere am Ende der Abfuhrschienen (16), eine Waage angeordnet ist, auf die das Produkt (50) fällt, um durch Wiegen festzustellen, ob es sich um nur ein Produkt (50) handelt, und/oder
- oberhalb der Abtransportvorrichtung eine Ausleitschiene in einer solchen Höhe über der Abtransportvorrichtung angeordnet ist, dass ein einzelnes Produkt (50) darunter hindurchläuft, aber zwei aufeinander liegende Produkte (50) von der Ausleitschiene erfasst und von der Abtransportvorrichtung herunter abgeleitet werden.

11. Verfahren zum Vereinzeln von gestapelten Produkten (50), insbesondere Schalen (50), unter Verwendung eines Vereinzelers (1) nach einem der vorstehenden Ansprüche, und zum Umrüsten des Vereinzelers, wobei zum Vereinzeln
- die gestapelten Produkte (50) von der Zufuhrseite (12) dem wenigstens einen in den Bewegungsweg der Produkte (5) hineinragenden Produktanschlag (5) zugeführt werden, auf dem das erste, unterste Produkt (50) der gestapelten Produkte (50) aufsitzt,
- das unterste der gestapelten Produkte (50) von der Abnahmeseite (13) her erfasst und über den Produktanschlag (5) hinweg gezogen wird, indem es dabei von dem wenigstens einem Produktanschlag (5) an seinem äußeren Rand (51) elastisch verformt wird und
- das unterste, vereinzelte Produkt (50) einzeln abgelegt wird,
**dadurch gekennzeichnet, dass**
zum Umrüsten auf ein neues Produkt (50) anstelle einer vorhandenen Formatplatte nebst Produkt-Anschlägen
e in zu dem neuen Produkt (50) passender, als Formatplatte ausgebildeter Anschlaghalter (2), der alle montierten und für das neue Produkt (50) eingestellten Produktanschläge (5) trägt, in eine Aufnahmevorrichtung (8) des Vereinzelers (1) eingesetzt und befestigt wird.

12. Verfahren nach Anspruch **11,**
**dadurch gekennzeichnet, dass**
das Ergreifen des untersten der gestapelten Produkte (50) und Hinwegziehen über die Produkt-Anschläge (5) mittels Festsaugen und Ziehen eines Haltekopfes (20) der Abnahmevorrichtung (6) mittels eines Saugnapfes (7) am Boden und/oder unter einem doppelt gekröpften Rand des Produktes (50) erfolgt.

13. Verfahren nach einem der vorhergehenden Verfahrensansprüche,
**dadurch gekennzeichnet, dass**
die Produktanschläge (5) als Anschlaghülsen (15) ausgebildet und entlang von Führungsdornen (14) des Anschlaghalters (2) verfahren und positioniert werden, sowohl in Längsrichtung (10) als auch in Drehrichtung der Führungsdorne (14).

14. Verfahren nach einem der vorhergehenden Verfahrensansprüche,
**dadurch gekennzeichnet, dass**
zum Umstellen auf ein neues Produkt die Position der Abnahmevorrichtung (6) in Abziehrichtung (19) justiert wird und insbesondere auch die für das Abziehen zurückzulegende Abziehstrecke (18) eines Haltekopfes (20) der Abnahmevorrichtung (6) in Abziehrichtung (19) festgelegt wird.

15. Verfahren nach einem der vorhergehenden Verfahrensansprüche,
**dadurch gekennzeichnet, dass**
nach dem Vereinzeln der Produkte (50) eine Überprüfung durchgeführt wird, ob es sich bei dem über den mindestens einen Produkt-Anschlag hinweg gezogenen Produkt um ein einzelnes Produkt (50) oder mehr als ein Produkt (50) aufeinander handelt, insbesondere mittels Höhenkontrolle am Abförderband (17) oder Gewichtskontrolle am Abförderband (17).

## Claims

1. An individualizer for stacked products (50), in particular dishes (50), the individualizer comprising:
- a feed device (4) to feed the stacked products (50) along a movement path,
- at least one product stop (5) which protrudes into the movement path of the products (50) and which is supported by a stop support (2),
- wherein the feed device (4) is arranged on a feed side (12) of the stop support (2),
- an extraction device (6) arranged on an extraction side (13) that is arranged opposite to the feed side (12) with respect to the stop support (2), wherein the extraction device is configured to grip a lowest of the stacked products (50) on the extraction side (13) and to pull the lowest product over the at least one product stop (5) wherein the stacked products (50) are elastic at least at their outer edge (51),
**characterized in that**
- the stop support (2) supports all product stops (5),
- the stop support (2) is a format plate (2) which is arranged transversal to the movement path of the products (50) to be individualized and which includes a format opening (3) which is larger than the product (50) viewed transversal to its main plane (11) and by which the products (50) to be individualized are moved through the main plane by the extraction device (6),
- the product stops (5) protrude from an edge of the format opening (3) into the format opening (3) far enough so that the product stops protrude into the movement path of the products (50) moved through the format opening (3),
- the format plate (2) is received in a receiving device (8) by the product stops (5) in which receiving device the format plate is positionable precisely and quickly.

2. The individualizer according to claim 1, **characterized in that** the product stops (5) are offset from the plane of the stop support (2) in a direction towards the feed side (12).

3. The individualizer according to one of the preceding claims,
**characterized in that**
the format plate (2) is insertable into the receiving device (8), advantageously with the center of the format opening (3) aligned to the center of a pull out device (19) of the extraction device (6).

4. The individualizer according to one of the preceding claims,
**characterized in that**
the extraction device (6) includes at least one suction cup (7) which is loadable with a vacuum in a controlled manner and which is movable transversal to a main plane (11) of a first product (50) to be gripped and the at least one suction cup (7) is positioned in particular below a base or under a double elbowed edge of the first product (50).

5. The individualizer according to one of the preceding claims,
**characterized in that**
- the feed device (4) for the stacked products (50) is oriented at a slant angle from above in downward direction towards the stop support (2) and the feed device (9) is inclined so that the stacked products (50) slide gravity induced along the feed device (4) towards the stop support (2) and/or,
- support mandrels (14) are arranged about the format opening (3) wherein the support mandrels protrude from the format plate (2) in a feed direction (9) and in particular include a tapering free end (14a).

6. The individualizer according to claim 5,
**characterized in that**
- the product stops (5) are stop sleeves (15) which fit onto the support mandrels (14) and which are positioned on the support mandrels (14) in a longitudinal direction (10) of the support mandrels (14) in particular interlocked or clamped and which are in particular also rotatable on the support mandrels (14) and/or
- the extraction device (6) is adjustable and positionable in the pull of direction (19).

7. The individualizer according to one of the preceding claims,
**characterized in that**
- the pull of path (18) of the extraction device (6) is adjustable and/or
- the extraction device (6) includes at least one extraction rail (16) extending transversal to the extraction device (6) wherein an individualized product (50) is deposited on the extraction rail and the extraction rail (16) is oriented in particular downward at a slant angle to an outgoing transfer device, in particular an outgoing conveyor belt (17).

8. The individualizer according to one of the preceding claims 5 - 7,
**characterized in that**
- the product stops (5) are arranged at least at two sides of the format opening (3) which are arranged opposite to each other, and/or
- the extension of the feed device (4) is oriented at an angle of 10° to 20° relative to the longitudinal direction (10) of the support mandrels (14) and extends flatter than the support mandrels (14).

9. The individualizer according to one of the preceding claims,
**characterized in that**
- a support head (20) of the extraction device (6), in particular the suction cup (7) is moved in a pull off direction (19) by an operating cylinder, in particular a pneumatic cylinder (21) and/or
- a control (22) is provided which controls the support head (20) of the extraction device (6) in and against the pull off direction (19) and controls the gripping of the first product (50), in particular by controlling a suction air loading of the suction cup.

10. The individualizer according to one of the preceding claims 7 - 9,
**characterized in that**
- a scale is arranged downstream of the extraction device (6), in particular at an end of the extraction rails (16) wherein the product (50) drops onto the scale in order to determine by weighing whether it is only an individual product (50), and/or
- an output rail is provided above the outgoing transport device at a level above the outgoing transport device so that an individual product (50) runs under the output rail, but two products (50) that are arranged on top of each other are captured by the output rail and conveyed outward by the outgoing transport device.

11. A method for individualizing stacked products (50), in particular dishes (50), using an individualizer (1) according to one of the preceding claims and for reconfiguring the individualizer, wherein the individualizing includes the steps:
- feeding the stacked products (50) from the feed side (12) to the at least one product stop (5) protruding into the movement path of the products (50) wherein a first and lowest product (50) of the stacked products (50) contacts the product stop (5),
- capturing the lowest of the stacked products (50) from the extraction side (13) and pulling it over the product stop (5) in that the lowest of the stacked products (50) is elastically deformed by the at least one product stop (5) at an outer edge (51) stop (5), and
- depositing the lowest individualized product (50) individually,
**characterized in that**
- for reconfiguring for a new product (50) a stop support (2) which is adapted to the new product (50) and configured as a format plate and which carries all product stops (5) that are mounted and adjusted for the new product (50) is inserted into receiving device (8) of the individualizer (1) and attached instead of a preexisting format plate including product stops.

12. The method according to claim 11,
**characterized in that**
gripping a lowest of the stacked products (50) and pulling it over the product stops (5) is performed by suctioning and pulling a support head (20) of the extraction device (6) by a suction cup (7) at a base, and/or under a double elbowed edge of the product (50).

13. The method according to one of the preceding method claims,
**characterized in that**
in the product stops (5) are configured as stop sleeves (15) and moved along support mandrels (14) of the stop support (2) and positioned in a longitudinal direction (10) and also in a rotation direction of the support mandrels (14).

14. The method according to one of the preceding method claims,
**characterized in that**
a position of the extraction device (6) is adjusted in a pull off direction (19) in order to reconfigure for a new product and in particular also a pull off path (18) of a support head (20) of the extraction device (6) which pull off path has to be traveled for the extraction is defined in the pull off direction (19).

15. The method according to one of the preceding method claims,
**characterized in that**
after individualizing the products (50) a check is done whether a product pulled over the at least one product stop is an individual product (50) or more than one product (50) stacked on top of each other, the check is done in particular by an elevation check at the outgoing conveyor belt (17) or by a weight check at the outgoing conveyor belt (17).

## Revendications

1. Séparateur pour produits empilés (50), en particulier pour des barquettes (50) avec
- un dispositif d'alimentation (4) pour amener les produits empilés (50) le long d'une trajectoire de déplacement,
- au moins une butée d'arrêt de produit (5), qui fait saillie dans la trajectoire de déplacement des produits (50) et qui est portée par un support de butée (2).
- le dispositif d'alimentation (4) étant disposé sur un côté alimentation (12) du support de butée (2),
- un dispositif de prélèvement (6) sur un côté prélèvement (13) opposé au côté alimentation (12) par rapport au support de butée (2), dispositif de prélèvement, qui est apte à saisir le plus bas des produits empilés (50), côté prélèvement (13), et à le passer au-dessus de l'au moins une butée d'arrêt de produit (5), les produits **empilés** (50) étant élastiques au moins dans la zone de leurs bords extérieurs (51),
**caractérisé en ce que**
- toutes les butées d'arrêt de produit (5) sont portées par le support de butée (2),
- le support de butée (2) est une plaque de format (2), qui est positionnée transversalement à la trajectoire de déplacement des produits à séparer (50) avec une ouverture de format (3), qui est plus grande que le produit (50), vue transversalement au plan principal (11) de celui-ci, et à travers laquelle les produits (50) à séparer sont déplacés par le dispositif de prélèvement (6),
- les butées d'arrêt de produit (5) s'avancent dans l'ouverture de format (3), depuis le bord de celle-ci, à un degré tel qu'elles font saillie dans la trajectoire de déplacement des produits (50) déplacés à travers l'ouverture de format (3),
- la plaque de format (2) étant, avec les butées d'arrêt de produit (5), reçue dans un dispositif de réception (8), dans lequel elle peut être positionnée rapidement et exactement de façon à en épouser la forme.

2. Séparateur suivant la revendication 1,
**caractérisé en ce que**
les butées d'arrêt de produit (5) sont décalées depuis le plan du support de butée (2), en direction du côté alimentation (12).

3. Séparateur suivant une quelconque des revendications précédentes,
**caractérisé en ce que**
la plaque de format (2) peut être insérée dans le dispositif de réception (8), de préférence avec le centre de l'ouverture de format (3) aligné sur le centre et le sens de prélèvement (19) du dispositif de prélèvement (6).

4. Séparateur suivant une quelconque des revendications précédentes,
**caractérisé en ce que**
le dispositif de prélèvement (6) présente au moins une ventouse (7) qui peut être sollicitée par une dépression de façon commandée et qui est déplaçable transversalement au plan principal (11) du premier produit à saisir (50) et **en ce que** la ventouse (7) est positionnée notamment sous le fond ou sous le bord coudé deux fois du premier produit (50).

5. Séparateur suivant une quelconque des revendications précédentes,
**caractérisé en ce que**
- le dispositif d'alimentation (4) des produits empilés (50) est orienté diagonalement du haut vers le bas, vers le support de butées (2) et incliné juste autant que les produits empilés (50) glissent, sous l'effet de la pesanteur, le long du dispositif d'alimentation (4) vers le support de butée (2) et/ou
- autour de l'ouverture de format (3) sont disposées des broches de guidage (14), qui se dressent depuis la plaque de format (2) dans le sens d'alimentation (9) et qui présentent notamment une extrémité libre effilée (14a).

6. Séparateur suivant la revendication 5,
**caractérisé en ce que**
les butées d'arrêt de produit (5) sont des douilles de butée (15) qui vont sur les broches de guidage (14), sur lesquelles, positionnées dans le sens longitudinal (10) des bras de guidage (14), elles peuvent être notamment enclenchées ou bloquées et notamment aussi tournées et/ou
- le dispositif de prélèvement (6) est réglable et positionnable dans le sens de prélèvement (19).

7. Séparateur suivant une quelconque des revendications précédentes,
**caractérisé en ce que**
- la trajectoire de prélèvement (18) du dispositif de prélèvement (6) est réglable et/ou
- le dispositif de prélèvement (6) comprend au moins un rail d'évacuation (16) s'étendant transversalement au dispositif de prélèvement (6), rail sur lequel peut être déposé le produit séparé (50) et **en ce que** le rail d'évacuation (16) est notamment orienté diagonalement vers le bas, vers un dispositif de décharge, en particulier un tapis de décharge (17).

8. Séparateur suivant une des revendications précédentes 5 à 7,
**caractérisé en ce que**
- les butées d'arrêt de produit (5) sont disposées au moins sur deux côtés opposés de l'ouverture de format (3) et/ou
- le sens d'extension du dispositif d'alimentation (4) forme un angle de 10 à 20° avec le sens longitudinal (10) des broches de guidage (14) et s'étend de façon moins inclinée que celui-ci.

9. Séparateur suivant une quelconque des revendications précédentes,
**caractérisé en ce que**
- une tête de retenue (20) du dispositif de prélèvement (6), notamment la ventouse (7), est déplacée dans le sens de prélèvement (19) au moyen d'un cylindre de travail, en particulier d'un cylindre pneumatique (21) et/ou
- **en ce qu'**une commande est prévue, qui pilote aussi bien la tête de retenue (20) du dispositif de prélèvement (6) dans le sens de prélèvement et à l'encontre du sens de prélèvement (19), que la saisie du premier produit (50), notamment en commandant l'alimentation en air aspirant de la ventouse.

10. Séparateur suivant une des revendications précédentes 7 à 9,
**caractérisé en ce que**
- en aval du dispositif de prélèvement (6), notamment à l'extrémité des rails d'évacuation (16), est disposée une balance, sur laquelle tombe le produit (50) pour constater par pesage, s'il ne s'agit que d'un seul produit, et/ou
- un rail de déviation est disposé au-dessus du dispositif de décharge, à une hauteur telle qu'un seul produit (50) passe au-dessous, mais que deux produits (50), empilés l'un sur l'autre, sont saisis par le rail de déviation et déviés du dispositif de décharge.

11. Procédé de séparation de produits empilés (50), en particulier de barquettes (50), utilisant un séparateur (1) suivant une des revendications précédentes et procédé de changement d'équipement du séparateur,
pour la séparation,
- les produits (50) empilés sont amenés, depuis le côté alimentation (12), à l'au moins une butée d'arrêt de produit (5) faisant saillie dans la trajectoire de déplacement des produits (50), butée d'arrêt de produit (5), contre laquelle bute le produit (50) le plus bas des produits (50) empilés,
- le plus bas des produits (50) empilés étant saisi côté prélèvement (13), passé au-dessus de la butée d'arrêt de produit (5) et alors déformé élastiquement dans la zone de son bord extérieur (51) par l'au moins une butée d'arrêt de produit (5) et
- le produit (50) le plus bas, séparé est déposé individuellement,
**caractérisé en ce que**
pour changer l'équipement pour un nouveau produit (50), un support de butée (2), qui est conçu comme plaque de format et adapté au nouveau produit (50) et qui porte toutes les butées d'arrêt de produit montées et réglées au nouveau produit (50), est inséré et fixé dans un dispositif de réception (8) du séparateur (1) à la place de la plaque de format et des butées d'arrêt de produit existantes.

12. Procédé suivant la revendication 11,
**caractérisé en ce que**
la saisie du plus bas des produits (50) empilés et le passage de celui-ci au-dessus les butées d'arrêt de produit (5) sous un effet de ventouse et le tirage d'une tête de retenue (20) du dispositif de prélèvement (6) ont lieu par le fond et/ou sous un bord coudé deux fois du produit (50) au moyen d'une ventouse (7).

13. Procédé suivant une des revendications précédentes,
**caractérisé en ce que**
les butées d'arrêt de produit (5) sont conçues comme douilles de butée (15) et déplacées le long de broches de guidage (14) du support de butées (2) et positionnées aussi bien dans le sens longitudinal (10) que dans le sens de rotation des broches de guidage (14).

14. Procédé suivant une des revendications précédentes,
**caractérisé en ce que**
pour passer à un nouveau produit, la position du dispositif de prélèvement (6) est réglée dans le sens de prélèvement (19) et c'est notamment le trajet de prélèvement à parcourir par la tête de retenue (20) du dispositif de prélèvement (6) dans le sens de prélèvement (19) qui est déterminé.

15. Procédé suivant une quelconque des revendications précédentes,
**caractérisé en ce que**
une fois les produits (50) séparés, il est procédé à une vérification pour savoir si le produit passé au-dessus de l'au moins une butée d'arrêt de produit est un seul produit (50) ou s'il s'agit de plusieurs produits (50), empilés l'un sur l'autre, notamment au moyen d'un contrôle de hauteur sur le tapis de décharge (17) ou d'un contrôle du poids sur le tapis de décharge (17).
